# DEMANDE DE BREVET EUROPEEN

(11) **EP 3 026 770 A1**
(43) Date de publication de la demande: **01.06.2016**
(21) Numéro de dépôt: 15195956.6
(22) Date de dépôt: 24.11.2015
(51) Int. Cl.: H02G 15/18, H01B 3/00, C08K 3/04, H02G 15/14, H02G 15/184

(54) **ÉLÉMENT DE PROTECTION RÉTRACTABLE À CHAUD**

(30) Priorité: 26.11.2014 FR 1461499
(71) Demandeur: Nexans, 75008 Paris (FR)
(72) Inventeur: ALLAIS, Arnaud, 69400 LIMAS (FR); COMBESSIS, Anthony, 13006 MARSEILLE (FR); FLANDIN, Lionel, 73210 PEISEY-NANCROIX (FR); MAUGIN, Melek, 69700 CHASSAGNY (FR); BADARD, Mathieu, Crolles 38920 (FR)
(74) Mandataire: Peguet, Wilfried

(57) **Abrégé**

La présente invention concerne un élément de protection rétractable à chaud comprenant au moins une couche de protection obtenue à partir d'une composition polymérique comprenant un matériau polymère, caractérisé en ce que la composition polymérique comprend en outre une charge électriquement conductrice ayant une surface spécifique BET d'au moins 100 m²/g selon la norme ASTM D 6556.

## Description

La présente invention se rapporte à un élément de protection rétractable à chaud et à son procédé de fabrication.

Elle s'applique typiquement, mais non exclusivement, aux domaines des câbles et accessoires d'énergie à basse tension (notamment inférieure à 6kV), à moyenne tension (notamment de 6 à 45-60 kV) ou à haute tension (notamment supérieur à 60 kV, et pouvant aller jusqu'à 800 kV), qu'ils soient à courant continu ou alternatif.

Un élément de protection rétractable à chaud peut être classiquement appelé « thermo-gaine » ou « manchon rétractable à chaud », dans le domaine de la câblerie.

Une thermo-gaine est une gaine qui se rétracte en direction radiale par rapport à l'axe longitudinal du câble, lorsqu'elle est chauffée au-dessus d'une certaine température. Typiquement, le volume de la matière constituant la thermo-gaine reste constant entre l'état rétractable ou non rétracté, et l'état rétracté : l'épaisseur de la gaine rétractée est ainsi plus importante que l'épaisseur de la gaine non rétractée. Le taux de rétractation d'une thermo-gaine peut être compris entre 100 et 600%, le taux de rétractation étant le rapport entre le diamètre interne de la gaine à l'état non rétracté et le diamètre interne de la gaine à l'état rétracté (obtenu après traitement thermique).

Ceci étant, il est difficile de fabriquer un élément de protection rétractable à chaud ayant des propriétés électriquement isolantes, qui devient semi-conducteur à l'état rétracté suite à son traitement thermique, tout en garantissant de bonnes propriétés mécaniques une fois l'élément de protection rétracté.

Le but de la présente invention est de pallier les inconvénients des techniques de l'art antérieur en proposant un élément de protection rétractable à chaud, destiné à être utilisé autour d'un câble, présentant des propriétés semi-conductrices ainsi que de bonnes propriétés mécaniques, une fois l'élément rétracté.

La présente invention a pour objet un élément de protection rétractable à chaud comprenant au moins une couche de protection obtenue à partir d'une composition polymérique comprenant un matériau polymère, caractérisé en ce que la composition polymérique comprend en outre une charge électriquement conductrice ayant une surface spécifique BET d'au moins 100 m²/g, et de préférence d'au moins 200 m²/g, selon la norme ASTM D 6556 (2014). La charge électriquement conductrice peut avoir une surface spécifique BET d'au plus 2000 m²/g, et de préférence d'au plus 1000 m²/g.

Dans la présente invention, la norme ASTM D 6556 (2014) correspond à la norme ASTM D 6556-14.

Plus particulièrement, l'élément de protection rétractable à chaud comprend une couche de protection qui est une couche polymérique chargée avec une charge électriquement conductrice ayant une surface spécifique BET d'au moins 100 m²/g, et de préférence d'au moins 200 m²/g, selon la norme ASTM D 6556 (2014). La charge électriquement conductrice peut avoir une surface spécifique BET d'au plus 2000 m²/g, et de préférence d'au plus 1000 m²/g.

Grâce à l'invention, l'élément de protection rétractable à chaud permet avantageusement d'obtenir un élément dont le contrôle de la qualité de pose est facilement réalisable par un simple test de conductivité électrique bien connu de l'homme du métier. En outre, l'élément de protection rétractable à chaud présente avantageusement une très faible conductivité électrique (i.e. électriquement isolant) tant que sa rétractation n'a pas été réalisée.

### La charge électriquement conductrice

La charge électriquement conductrice de l'invention est de préférence une charge carbonée.

On entend par « charge carbonée » toute particule, ou mélange de particules, majoritairement constituées d'atomes de carbone, fonctionnalisées ou non, greffées ou non. La charge carbonée conductrice présente des propriétés électriquement conductrices.

A titre d'exemples, la charge carbonée conductrice peut être choisie parmi les noirs de carbone, les fibres de carbone, les graphites, les graphènes, les fullerènes, les nanotubes de carbone, et un de leurs mélanges.

La charge électriquement conductrice de l'invention de l'invention est préférentiellement une nanoparticule.

Les nanoparticules ont typiquement au moins l'une de leurs dimensions de taille nanométrique (10⁻⁹ mètre).

On entend par le terme « dimension », la dimension moyenne en nombre de l'ensemble des nanoparticules d'une population donnée, cette dimension étant classiquement déterminée par des méthodes bien connues de l'homme du métier.

La dimension des nanoparticules selon l'invention peut être par exemple déterminée par microscopie, notamment par microscope électronique en transmission (MET).

La dimension moyenne en nombre des nanoparticules peut être notamment d'au plus 400 nm, de préférence d'au plus 300 nm, et plus préférentiellement d'au plus 100 nm.

De façon particulièrement préférée, la dimension moyenne en nombre des nanoparticules est d'au moins 1 nm et d'au plus 100 nm, de préférence d'au moins 1 nm et d'au plus 50 nm, et de façon particulièrement préférée d'au moins 1 et d'au plus 3 nm.

Dans un mode de réalisation particulièrement préféré, la charge électriquement conductrice de l'invention a un facteur de forme d'au moins 10, de préférence d'au moins 100, et de façon particulièrement préférée d'au moins 200. Le facteur de forme est typiquement le rapport entre la plus petite dimension de la charge conductrice (telle que par exemple le diamètre de la charge conductrice pour des nanotubes de carbone) et la plus grande dimension de ladite charge conductrice (telle que par exemple la longueur de la charge conductrice pour des nanotubes de carbone).

On utilisera de façon préférée les nanotubes de carbone en tant que charge électriquement conductrice selon l'invention. Les nanotubes de carbone présentent l'avantage d'avoir une meilleure compatibilité avec le matériau polymère, par rapport aux autres types de charges carbonées conductrices citées dans la présente invention.

On entend par « nanotubes » des nanoparticules de forme sensiblement allongée. Les nanotubes ont classiquement une forme dite « aciculaire ».

Les nanotubes de carbone peuvent être de plusieurs types. Ils peuvent être choisis parmi les nanotubes de carbone à simple paroi, les nanotubes de carbone à double-paroi, les nanotubes de carbone multiparois, et un de leurs mélanges. On utilisera de préférence les nanotubes de carbone multiparois, bien connus sous l'anglicisme « multi-walled nanotubes (MWNT) ».

Dans un mode de réalisation particulier, la composition polymérique peut comprendre une quantité suffisante de charges électriquement conductrices pour pouvoir obtenir les propriétés désirées dans l'élément de protection rétractable.

Plus particulièrement, la quantité de charge électriquement conductrice dans la composition polymérique de l'invention est notamment suffisante pour pouvoir constituer un réseau percolant, lorsque l'élément de protection rétractable est à l'état rétracté.

Plus particulièrement, la quantité de charge électriquement conductrice est suffisante pour que l'élément de protection rétractable de l'invention puisse accomplir une transition de percolation dite « dynamique », une fois ledit élément rétracté, en particulier par traitement thermique.

On entend par « percolation dynamique » une transition isolant-conducteur (i.e. une augmentation de plusieurs ordres de grandeur de la conductivité électrique associée à échelle mésoscopique par la formation et la croissance d'amas de particules électriquement conductrices qui tendent à constituer un amas infini de charges inter-connectées) observée à taux de charge constant et résultant d'un réarrangement microstructural du composite par auto-assemblage des charges électriquement conductrices dans l'élément de protection rétracté à l'aide d'un traitement thermique.

En outre, la quantité de charges électriquement conductrices dans la composition polymérique de l'invention est notamment limitée pour pouvoir garantir des propriétés électriquement isolantes, lorsque l'élément de protection rétractable est dans un état non rétracté.

A titre d'exemple, la composition polymérique peut comprendre au plus 30,0 parties en poids de charges électriquement conductrices, et de préférence au plus 10,0 parties en poids de charges électriquement conductrices, et de façon particulièrement préférée au plus 5,0 parties en poids de charges électriquement conductrices, pour 100 parties en poids du matériau polymère. La composition polymérique peut comprendre en outre au moins 0,1 partie en poids de charges électriquement conductrices, pour 100 parties en poids de matériau polymère.

Lorsque la charge électriquement conductrice de l'invention est des nanotubes de carbone, la quantité de ladite charge peut être d'au plus 10,0 parties en poids de charges électriquement conductrices, pour 100 parties en poids de matériau polymère. En effet, les nanotubes de carbone, ayant un facteur de forme élevé (notamment un facteur de forme d'au moins 100), permettent d'atteindre la percolation avec des quantités de charges carbonées conductrices relativement plus faibles comparativement aux autres charges carbonées.

### Le matériau polymère

Le matériau polymère de l'invention peut comprendre un ou plusieurs polymère(s), le terme « polymère » pouvant s'entendre par tout type de polymère bien connu de l'homme du métier tel que homopolymère ou copolymère (e.g. copolymère séquencé, copolymère statistique, terpolymère, ..etc).

Le polymère peut être du type thermoplastique ou élastomère, et peut être réticulé par des techniques étant bien connues de l'homme du métier.

Dans un mode de réalisation particulier, le matériau polymère, ou en d'autres termes la matrice polymère de la composition polymérique, peut comprendre un ou plusieurs polymères d'oléfine et/ou un ou plusieurs polymères halogénés.

De préférence, le matériau polymère de l'invention peut comprendre un ou plusieurs polymères d'éthylène et/ou un ou plusieurs polymères de propylène. Un polymère d'oléfine est classiquement un polymère obtenu à partir d'au moins un monomère d'oléfine.

Plus particulièrement, le matériau polymère comprend plus de 50% en poids de polymère(s) d'oléfine, de préférence plus de 70% en poids de polymère(s) d'oléfine, et de façon particulièrement préféré plus de 90% en poids de polymère(s) d'oléfine, par rapport au poids total de matériau polymère. De préférence, le matériau polymère peut être uniquement composé d'un ou de plusieurs polymère(s) d'oléfine.

A titre d'exemple, le matériau polymère de l'invention peut comprendre un ou plusieurs polymères d'oléfine choisis parmi un polyéthylène linéaire basse densité (LLDPE); un polyéthylène très basse densité (VLDPE); un polyéthylène basse densité (LDPE); un polyéthylène moyenne densité (MDPE); un polyéthylène haute densité (HDPE); un copolymère élastomère d'éthylène-propylène (EPR); un terpolymère éthylène propylène diène monomère (EPDM); un copolymère d'éthylène et de vinyl ester tel qu'un copolymère d'éthylène et d'acétate de vinyl (EVA); un copolymère d'éthylène et d'acrylate tel qu'un copolymère d'éthylène et d'acrylate de butyle (EBA) ou un copolymère d'éthylène et d'acrylate de méthyle (EMA); un copolymère d'éthylène et d'alpha-oléfine tel qu'un copolymère d'éthylène et d'octène (PEO) ou un copolymère d'éthylène et de butène (PEB); un polymère d'oléfine fonctionnalisé ; du polypropylène ; un copolymère du propylène ; et un de leurs mélanges.

On préférera utiliser un EVA avec un taux de groupements d'acétate de vinyle d'au plus 28% en poids, et de préférence d'au plus 20% en poids, afin de limiter la présence de fonctions polaires.

Le matériau polymère de l'invention peut comprendre un ou plusieurs polymères halogénés, notamment chlorés et/ou fluorés. A titre d'exemple, on peut citer le polyfluorure de vinylidène (PVDF), le polytétrafluoroéthylène (PTFE) ou le polychloroprène.

La composition polymérique de l'invention peut comprendre au moins 30 % en poids de matériau polymère, de préférence au moins 50 % en poids de matériau polymère, de préférence au moins 80% en poids de matériau polymère, et de préférence au moins 90% en poids de matériau polymère, par rapport au poids total de la composition polymérique.

### La composition polymérique

La composition polymérique de l'invention peut être une composition « non réticulable » ou une composition réticulable.

La composition polymérique de l'invention peut être une composition non expansée ou destinée à être expansée. L'expansion d'une composition polymérique est bien connue de l'homme du métier, et peut être réalisée par une expansion chimique, en ajoutant par exemple un agent moussant endothermique ou exothermique à la composition, ou une expansion physique, en ajoutant par exemple un gaz dans la composition.

Lorsque la composition polymérique de l'invention est dite « non réticulable », cela signifie que l'élément de protection, ou plus particulièrement la couche de protection, obtenu(e) à partir de cette composition polymérique « non réticulable » est un élément non réticulé. On entend par « non réticulé » un élément dont le taux de gel selon la norme ASTM D2765-01 (extraction au xylène) est d'au plus 20%, de préférence d'au plus 10%, de préférence d'au plus 5%, et de façon particulièrement préférée de 0%. En d'autres termes, l'élément de protection rétractable à chaud, ou plus particulièrement la couche de protection, est un élément thermoplastique ou élastomérique.

Lorsque la composition polymérique de l'invention est dite « réticulable », cela signifie que l'élément de protection, ou plus particulièrement la couche de protection, obtenu(e) à partir de cette composition polymérique réticulable est un élément réticulé. L'élément réticulé peut être facilement caractérisé par la détermination de son taux de gel selon la norme ASTM D2765-01. Plus particulièrement, l'élément réticulé peut avoir avantageusement un taux de gel, selon la norme ASTM D2765-01 (extraction au xylène), d'au moins 50%, de préférence d'au moins 70%, de préférence d'au moins 80%, et de façon particulièrement préférée d'au moins 90%.

La composition polymérique dite réticulable peut être ainsi réticulée par des procédés de réticulation bien connues de l'homme du métier, tels que par exemple la réticulation peroxyde, la réticulation par faisceau d'électrons, la réticulation silane, la réticulation par rayonnement ultra-violets, ..etc.

La composition polymérique réticulable peut comprendre une quantité suffisante d'un ou de plusieurs agents de réticulation, afin d'obtenir un élément de protection réticulé. A titre d'exemple, la composition polymérique réticulable peut comprendre de 0,01 à 10,0 % en poids d'agent de réticulation, par rapport au poids total de la composition polymérique réticulable.

Dans un mode de réalisation particulier, la composition polymérique peut être avantageusement exempte de composes halogénés.

### Autres charges

La composition polymérique de l'invention peut en outre comprendre une ou plusieurs autres charges, différentes de la charge électriquement conductrice de l'invention.

Cette autre charge peut être une charge minérale ou organique. Elle peut être choisie parmi une charge ignifugeante et une charge inerte (ou charge non combustible).

A titre d'exemple, la charge ignifugeante peut être une charge hydratée, choisie notamment parmi les hydroxydes métalliques tels que par exemple le dihydroxyde de magnésium (MDH) ou le trihydroxyde d'aluminium (ATH). Ces charges ignifugeantes agissent principalement par voie physique en se décomposant de manière endothermique (e.g. libération d'eau), ce qui a pour conséquence de limiter la propagation des flammes. On parle notamment de propriétés de retard à la flamme, bien connues sous l'anglicisme « *flame retardant* ».

La charge inerte peut être, quant à elle, par exemple de la craie, du talc, ou de l'argile (e.g. le kaolin).

La composition polymérique peut comprendre au moins 1% en poids d'autre(s) charge(s), de préférence au moins 10% en poids d'autre(s) charge(s), et de préférence au plus 50% en poids d'autre(s) charge(s), par rapport au poids total de la composition polymérique.

Selon une autre caractéristique de l'invention, et afin de garantir un élément de protection rétractable sans halogène, ledit élément de protection rétractable, ou en d'autres termes les constituants qui composent l'élément de protection rétractable, ne comprend/comprennent de préférence pas de composés halogénés. Ces composés halogénés peuvent être de toutes natures, tels que par exemple des polymères fluorés ou des polymères chlorés comme le polychlorure de vinyle (PVC), des plastifiants halogénés, des charges minérales halogénées, ...etc.

Dans un mode de réalisation préféré, les charges qui composent la composition polymérique de l'invention ne sont qu'une ou des charges électriquement conductrices telles que définies dans la présente invention.

### Les additifs

La composition polymérique de l'invention peut typiquement comprendre en outre des additifs en une quantité de 0,01 à 20 % en poids par rapport au poids total de la composition polymérique.

Les additifs sont bien connus de l'homme du métier et peuvent être par exemple choisis parmi :
- des agents de protection, tels que des antioxydants, des anti-UV, des anti-cuivre, des agents anti-arborescences d'eau,
- des agents de mise en oeuvre, tels que des plastifiants, des lubrifiants, des huiles,
- des agents compatibilisants,
- des agents de couplage,
- des retardateurs de grillage,
- des pigments,
- des co-agents de réticulation,
- des catalyseurs de réticulation,
- et un de leurs mélanges.

Plus particulièrement, les antioxydants permettent de protéger la composition polymérique des contraintes thermiques engendrées lors des étapes de fabrication de l'élément de protection rétractable, de sa pose, ou de son fonctionnement.

Les antioxydants sont choisis de préférence parmi :
- les antioxydants phénoliques à encombrement stérique tels que le tetrakisméthylene(3,5-di-t-butyl-4-hydroxy-hydrocinnamate) méthane, le octadecyl 3-(3,5-di-t-butyl-4-hydroxyphényle)propionate, le 2,2'-thiodiéthylène bis[3-(3,5-di-t-butyl-4-hydroxyphényle) propionate], le 2,2'-Thiobis(6-t-butyle-4-méthylephénol), le 2,2'-méthylenebis(6-t-butyle-4-méthylphénol), le 1,2-Bis(3,5-di-t-butyle-4-hydroxyhydrocinnamoyl) hydrazine, et le [2,2'-oxamido-bis(éthyl 3(3,5-di-t-butyle-4-hydroxyphényle) propionate)] ;
- les thioéthers tels que le 4,6-bis(octylthiométhyle)-o-crésol, le Bis[2-méthyle-4-{ 3-n-alkyle (C12 ou C14)thiopropionyloxy}-5-t-butylphényle]sulfide et le Thiobis-[2-t-butyl-5-méthyle-4,1-phénylène] bis [3-(dodecylthio)propionate] ;
- les antioxydants à base de soufre tels que le Dioctadecyl-3,3'-thiodipropionate ou le Didodecyl-3,3'-thiodipropionate ;
- les antioxydants à base de phosphore tels que les phosphites ou phosphonates comme par exemple le Tris(2,4-di-t-butyl-phényle)phosphite ou le Bis(2,4-di-t-butylphényle) pentaerythritol diphosphite ; et
- les antioxydants de type amine tels que les phénylène diamines (IPPD, 6PPD...), les diphénylamine styrène (i.e. « *styrenated diphenylamine* »), les diphénylamines, les mercapto benzimidazoles et le 2,2,4-trimethyl-1,2 dihydroquinoline polymérisé (TMQ), ce dernier type d'antioxydant étant particulièrement préféré dans la composition de l'invention.

Les TMQ peuvent avoir différents grades, à savoir :
- un grade dit « standard » avec un faible degré de polymérisation, c'est-à-dire avec un taux de monomère résiduel supérieur à 1% en poids et ayant une teneur en NaCl résiduelle pouvant aller de 100 ppm à plus de 800 ppm (parties par million massiques) ;
- un grade dit « à haut degré de polymérisation » avec un haut degré de polymérisation, c'est-à-dire avec un taux de monomère résiduel inférieur à 1% en poids et ayant une teneur en NaCl résiduelle pouvant aller de 100 ppm à plus de 800 ppm ;
- un grade dit « à faible teneur en sel résiduel » avec une teneur en NaCl résiduelle inférieure à 100 ppm.

Le type de stabilisant et son taux dans la composition polymérique de l'invention sont classiquement choisis en fonction de la température maximale subie par les polymères pendant la production du mélange et pendant leur mise en oeuvre, ainsi que selon la durée maximale d'exposition à cette température.

Les catalyseurs de réticulation ont pour but d'aider à la réticulation. Le catalyseur de réticulation peut être choisi parmi les acides de Lewis ; les acides de Brönsted ; et les catalyseurs à base d'étain comme par exemple le dilaurate de dibutylétain (DBTL).

### L'élément de protection rétractable

Dans la présente invention, l'élément de protection rétractable a une mémoire de forme et une mémoire de fonction, une fois que la composition polymérique a été étirée à chaud et refroidie.

Plus particulièrement, la mémoire de forme permet à l'élément rétractable de retrouver les dimensions souhaitées vis-à-vis de l'application (comme par exemple épouser le diamètre du câble à protéger) après le traitement thermique. La mémoire de fonction permet à l'élément rétractable de garantir des propriétés de conduction électrique après traitement thermique.

L'élément de protection rétractable de l'invention (i.e. élément avant qu'il ne soit rétracté), et notamment la couche de protection de l'invention (i.e. couche avant qu'elle ne soit rétractée), est plus particulièrement un élément électriquement isolant. On entend par « électriquement isolant » un élément, ou plus particulièrement une couche, dont la conductivité électrique peut être d'au plus 1.10⁻⁸ S/m (siemens par mètre), et de préférence strictement inférieure à 1.10⁻⁸ S/m, mesurée à 25°C en courant continu.

Dans la présente invention, l'élément de protection rétracté (i.e. élément rétractable qui a été rétracté), et notamment la couche de protection de l'invention (i.e. couche qui a été rétractée), est plus particulièrement un élément semi-conducteur. On entend par « semi-conducteur » un élément, ou plus particulièrement une couche, dont la conductivité électrique peut être d'au moins 1.10⁻⁸ S/m (siemens par mètre), de préférence strictement supérieure à 1.10⁻⁸ S/m, de préférence d'au moins 1.10⁻³ S/m, et de préférence peut être inférieure à 1.10³ S/m, mesurée à 25°C en courant continu.

Dans un mode de réalisation particulier, la conductivité électrique de la composition polymérique est inférieure à la conductivité électrique de la couche de protection. La conductivité électrique de la composition polymérique peut être au moins 10 fois inférieure à la conductivité électrique de la couche de protection, de préférence au moins 100 fois inférieure à la conductivité électrique de la couche de protection, et de façon particulièrement préférée au moins 1000 fois inférieure à la conductivité électrique de la couche de protection.

Dans un mode de réalisation préféré, l'élément de protection rétractable à chaud est un élément tubulaire qui se rétracte en direction radiale par rapport à l'axe longitudinal d'un câble, lorsqu'il subit un traitement thermique. L'élément tubulaire peut être une gaine ou un manchon.

Typiquement, le volume de la matière constituant l'élément tubulaire reste constant entre l'état rétractable ou non rétracté, et l'état rétracté : l'épaisseur de l'élément tubulaire rétracté est ainsi plus importante que l'épaisseur de l'élément tubulaire non rétracté.

Le taux de rétractation de l'élément tubulaire peut être compris entre 100 et 600%, le taux de rétractation étant le rapport entre le diamètre interne de l'élément tubulaire à l'état non rétracté et le diamètre interne de l'élément tubulaire à l'état rétracté (obtenu après traitement thermique).

L'élément de protection rétractable de l'invention peut comprendre une ou plusieurs couches de protection conformes à l'invention.

De préférence, l'ensemble des couches qui constituent l'élément de protection rétractable à chaud sont des couches rétractables à chaud.

Dans un mode de réalisation particulier, l'élément de protection rétractable de l'invention comprend au moins une couche de protection rétractable à chaud conforme à l'invention, et au moins une couche rétractable à chaud différente de la couche de protection conforme à l'invention.

Plus particulièrement, la couche rétractable à chaud différente de la couche de protection conforme à l'invention peut être une couche électriquement isolante qui restera électriquement isolante dans son état rétracté (après traitement thermique).

A titre d'exemple, l'élément de protection rétractable à chaud comprend une première couche de protection conforme à l'invention recouvrant une seconde couche différente de la première couche. A l'état non rétracté (avant traitement thermique), la première couche et la deuxième couche sont toutes les deux des couches électriquement isolantes. A l'état rétracté (après traitement thermique), la première couche (de protection) devient semi-conductrice, et la deuxième couche reste électriquement isolante.

Un autre objet de l'invention est un procédé de fabrication d'un élément de protection rétractable à chaud selon l'invention, caractérisé en ce qu'il comprend les étapes suivantes :
i. étirer à chaud la composition polymérique; et
ii. refroidir dans son état étiré, la composition polymérique étirée à l'étape i, notamment à température ambiante (e.g. autour de 25°C).

De préférence, la composition polymérique est sous forme d'un élément tubulaire, tel que par exemple une gaine ou un manchon. Par exemple, la composition polymérique avant l'étape i a été mise en forme par extrusion pour former ledit élément tubulaire.

L'étape i d'étirement à chaud permet de pouvoir former un élément rétractable avec des dimensions lui permettant de pouvoir être facilement positionné autour d'un câble électrique. Le taux de rétractation final est ainsi fonction de l'étape i.

Par exemple, lorsque l'élément de protection rétractable est sous forme d'un manchon destiné à être positionné autour d'un câble électrique, le diamètre interne du manchon rétractable doit être supérieur au diamètre externe du câble afin de pouvoir facilement installer ledit manchon rétractable autour dudit câble électrique. Le manchon rétractable est ensuite rétracté par traitement thermique de façon suffisante pour pouvoir avoir un diamètre interne sensiblement identique au diamètre externe du câble électrique.

L'étape i d'étirement à chaud est une étape réalisée par étirement mécanique de la composition polymérique, par exemple par expansion sous vide en passant dans un four tubulaire sous dépression par rapport au centre du tube réticulé. Une fois expansé le tube est débité en longueur unitaire de type manchon.

L'étirement de la composition polymérique est limité par l'allongement maximal que peut supporter la composition polymérique, à savoir sa rupture mécanique.

L'étirement à chaud de la composition polymérique est réalisé à une température suffisante pour rendre la composition polymérique malléable, sans pour autant dégrader thermiquement ladite composition.

Plus particulièrement, le traitement thermique de l'étape i peut se faire au-dessus de la température de fusion de la composition polymérique lorsque le matériau polymère est cristallin ou semi-cristallin, et au-dessus de la température de transition vitreuse de la composition polymérique lorsque le matériau polymère est amorphe.

Dans la présente invention, la température de fusion ou de transition vitreuse du matériau polymère est classiquement mesurée respectivement au pic de fusion ou à l'observation d'un épaulement, sur un thermogramme obtenu par analyse calorimétrique différentielle (DSC) avec une rampe de température de 10°C/min sous atmosphère d'azote.

Un autre objet de l'invention est un câble, notamment un câble électrique, comprenant un élément de protection rétracté obtenu à partir de l'élément de protection rétractable à chaud de l'invention.

Plus particulièrement, l'élément de protection rétracté est sous forme tubulaire, par exemple du type gaine ou manchon.

De préférence, l'élément de protection rétracté épouse sensiblement les formes de l'élément qu'il recouvre. La couche de protection de l'élément de protection rétracté peut être avantageusement une couche semi-conductrice, qui peut être notamment obtenu à partir de la couche de protection de l'élément de protection rétractable à chaud.

Dans un mode de réalisation particulier, l'élément de protection rétracté est la thermo-gaine mentionnée ci-avant, dans son état rétracté.

L'élément de protection rétracté peut être un accessoire pour câble, ledit accessoire entourant ainsi le câble. L'accessoire peut être notamment une jonction ou une terminaison pour câble. Les propriétés semi-conductrices de l'élément de protection rétracté permettent avantageusement de pouvoir contrôler la géométrie du champ électrique, lorsque le câble électrique est sous tension.

Un autre objet de l'invention est un procédé de fabrication d'un câble comprenant un élément de protection rétracté, caractérisé en ce qu'il comprend les étapes suivantes :
a.positionner l'élément de protection rétractable autour d'un câble, et
b. traiter thermiquement l'élément de protection rétractable positionné à l'étape a, pour former ledit élément de protection rétracté.

Typiquement, l'étape b permet à l'élément de protection étiré à l'étape i de pouvoir se rétracter, et notamment de pouvoir retrouver l'allongement initial qu'il avait avant l'étape i.

La température du traitement thermique de l'étape b peut être choisie de manière à ce que la relaxation des contraintes mécaniques sur les chaines polymères - responsable de la rétractation du système - et la percolation dynamique soient rendues possibles. La température de l'étape b ne doit pas dépasser une valeur limite à partir de laquelle une dégradation thermique du matériau pourrait intervenir.

Le câble décrit dans l'invention est de préférence un câble électrique comprenant un conducteur électrique allongé, notamment en position centrale, entouré par au moins une couche électriquement isolante, obtenue classiquement par extrusion. Le conducteur électrique allongé peut être un fil métallique ou une pluralité de fils métalliques, torsadé(s) ou non, notamment en cuivre et/ou en aluminium, ou un de leurs alliages.

Dans un premier mode de réalisation, le câble électrique peut être un câble à basse tension comprenant uniquement une couche électriquement isolante, ou bien comprenant une couche électriquement isolante entourée par une couche semi-conductrice.

Dans un second mode de réalisation, le câble électrique peut être un câble à moyenne tension ou à haute tension. Ce type de câble électrique comprend typiquement un conducteur électrique allongé central entouré par une première couche semi-conductrice, cette première couche semi-conductrice étant entourée par une couche électriquement isolante, cette couche électriquement isolante étant entourée par une deuxième couche semi-conductrice. On parle alors d'une isolation dite « tri-couche ». Le câble électrique peut en outre comprendre un écran métallique de mise à la terre et/ou de protection entourant la deuxième couche semi-conductrice, et ledit écran métallique peut être entouré par une gaine extérieure de protection, notamment en polymère.

D'autres caractéristiques et avantages de la présente invention apparaîtront à la lumière des exemples qui vont suivre en référence aux figures annotées, lesdits exemples et figures étant donnés à titre illustratif et nullement limitatif.
La figure 1 représente une vue schématique d'un élément de protection rétractable à chaud selon l'invention, positionné autour de câbles électriques, avant et après traitement thermique.
La figure 2 représente une vue schématique d'une éprouvette modèle pour déterminer la conductivité électrique de la composition polymérique selon l'invention en fonction des étapes de fabrication d'un élément de protection rétractable à chaud selon l'invention.

Pour des raisons de clarté, seuls les éléments essentiels pour la compréhension de l'invention ont été représentés de manière schématique, et ceci sans respect de l'échelle.

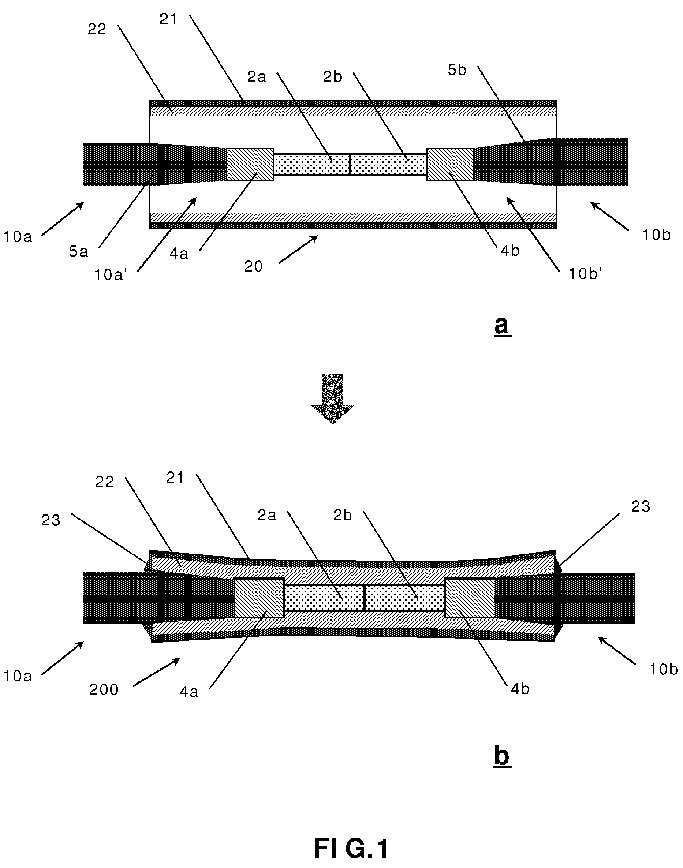

La figure 1 représente une vue schématique d'un élément de protection rétractable 20 à chaud selon l'invention, positionné autour de câbles électriques 10a et 10b, avant traitement thermique (partie « a » de la figure 1) et après traitement thermique (partie « b » de la figure 1). L'élément de protection rétractable 20 est plus particulièrement ici une jonction entourant les extrémités 10'a et 10'b des deux câbles électriques 10a et 10b. Cette jonction permet de connecter électriquement le premier câble 10a au deuxième câble 10b.

L'élément de protection rétractable 20 comprend une première couche de protection 21 conforme à l'invention, et une deuxième couche 22, différente de la première couche, la première couche 21 entourant la deuxième couche 22.

A l'état non rétracté (a) (avant traitement thermique), la première couche et la deuxième couche de l'élément de protection rétractable 20 sont toutes les deux des couches électriquement isolantes.

Lorsque l'élément de protection est rétracté (i.e. élément de protection rétracté 200) par traitement thermique (b), la première couche de protection 21 devient une couche semi-conductrice, et la deuxième couche 22 reste électriquement isolante.

En outre, l'élément de protection rétracté 200 épouse sensiblement les formes des parties des câbles électriques 10a et 10b qu'il recouvre.

Le premier câble 10a et le deuxième câble 10 b représentés schématiquement sur la figure 1 comprennent respectivement un conducteur électrique 2a,2b allongé entouré par une première couche semi-conductrice (non représentée), une couche électriquement isolante 4a,4b entourant la première couche semi-conductrice 3a,3b et une seconde couche semi-conductrice 5a,5b entourant la couche électriquement isolante 4a,4b.

Typiquement, à ladite extrémité 10'a, 10'b de chaque câble électrique 10a, 10b, la seconde couche semi-conductrice 5a, 5b est au moins partiellement dénudée afin que la couche électriquement isolante 4a, 4b soit au moins partiellement positionnée à l'intérieur de l'élément de protection 20, 200, sans être recouverte de la seconde couche semi-conductrice 5a, 5b du câble électrique.

Classiquement les câbles électriques 10a et 10b peuvent être connectés entre eux grâce à un connecteur électrique (non représenté).

Enfin, les extrémités de l'élément de protection rétracté 200 peuvent être respectivement entourées par un ruban semi-conducteur 23. Ainsi, la première couche de protection 21 et les secondes couches semi-conductrices 5a et 5b sont en contact physique, par l'intermédiaire dudit ruban semi-conducteur 23.

Bien entendu, le mode de réalisation décrit dans la figure 1 n'est pas limitatif. Dans un autre mode de réalisation, l'élément de protection rétractable 20 peut comprendre uniquement la première couche de protection 21 conforme à l'invention : l'élément de protection rétractable 20 est ainsi la couche de protection 21 conforme à l'invention. De ce fait, la première couche de protection 21 de l'élément de protection rétracté 200 épouse sensiblement les formes des parties des câbles électriques 10a et 10b qu'il recouvre. La première couche de protection 21 est ainsi en contact physique direct avec les secondes couches semi-conductrices 5a et 5b des câbles électriques 10a et 10b. Dans ce cas, il n'est pas nécessaire de positionner lesdits rubans semi-conducteurs 23.

### Exemples

### 1. Composition polymérique selon l'invention

Le tableau 1 ci-dessous décrit une composition polymérique I1 selon l'invention, dont les quantités des composés sont exprimées en parties en poids pour 100 parties en poids de matériau polymère.

Le matériau polymère dans le tableau 1 est composé uniquement d'EVA.

**Tableau 1**

| | |
|---|---|
| Composition polymérique | I1 |
| Matériau polymère | 100 |
| Charge électriquement conductrice | 5,3 |

L'origine des composés du tableau 1 est la suivante :
- Matériau polymère est un copolymère statistique d'éthylène et d'acétate de vinyle (EVA) ayant une température de fusion de 96°C, commercialisé par la société ExxonMobil Chemical sous la référence Escorene Ultra EVA UL00112, ayant 12% en poids de groupements d'acétate de vinyle ; et
- Charge électriquement conductrice est des nanotubes de carbone multiparois, commercialisés par la société Arkema sous la référence Graphistrength C100, ayant :
   - une surface spécifique BET d'environ 250 m²/g selon la norme ASTM D 6556,
   - un diamètre moyen externe de 10 à 15 nanomètre, mesuré par MET,
   - une longueur de 0,1 à 10 micromètre, mesurée par MET, et
   - un facteur de forme de l'ordre de 100 à 1000.

### 2. Préparation de l'élément de protection rétractable à chaud

La composition polymérique I1 dans le tableau 1 est mise en oeuvre comme suit.

Le matériau polymère est introduit dans un mélangeur interne à une température de 110 °C. Les nanotubes de carbone sont ajoutés après fusion complète de la matrice polymère. Le composite obtenu après homogénéisation pendant 5 minutes est ensuite passé sur mélangeur à cylindres afin d'optimiser la dispersion et la distribution des nanoparticules. Le composite peut par ailleurs être obtenu par extrusion en monovis ou encore en bi-vis.

Le composite est finalement mis en oeuvre sous la forme de plaques de 1 mm d'épaisseur par compression à chaud pendant 10 minutes à 130°C.

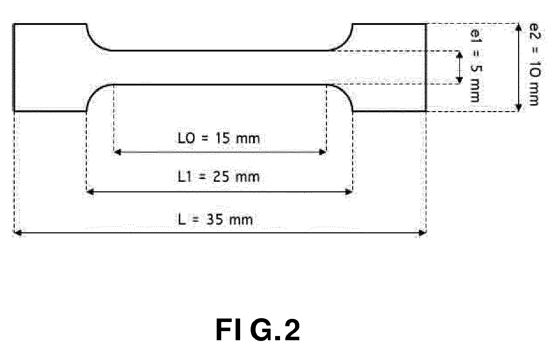

Des éprouvettes de type H1 de forme et de dimensions indiquées dans la figure 2, sont découpées à l'aide d'un emporte-pièce, les éprouvettes ayant une épaisseur de 1 mm. L'allongement initial LO de l'éprouvette (avant son étirement) est de 15 mm.

Ces éprouvettes vont servir à évaluer les propriétés électriques de la composition polymérique de l'invention, et donc par extensions les propriétés électriques de l'élément de protection rétractable à chaud, lors de sa fabrication.

L'éprouvette va être préparée comme suit :

Dans une première étape i, l'éprouvette est étirée de 15 mm grâce à une machine de traction, sous une température de 85°C dans une enceinte de conditionnement : l'allongement de l'éprouvette devient alors égal à 30 mm.

Comme le composite de cet exemple n'est pas réticulé (i.e. composition polymérique I1), l'allongement à chaud sous contrainte est réalisé à 85°C. A cette température, le matériau est ramolli, mais ne s'écoule pas puisque la phase cristalline n'est pas entièrement fondue.

Plus particulièrement, l'étape de traitement thermique en i est réalisée dans une enceinte de conditionnement de marque Adamel-Lhomargy, pilotée à l'aide d'un contrôleur de température Eurotherm 808.

L'étape d'étirement à chaud en i est réalisée à l'aide d'une machine de traction (couplée à l'enceinte de conditionnement) de référence Adamel-Lhomargy DY 32 avec une vitesse de traction de 3 mm/minute, l'allongement maximal supporté par la machine de traction étant de 20 mm.

Ensuite, dans une seconde étape ii, l'éprouvette étirée en i est refroidie à 25°C pendant 60 minutes, dans son état étiré.

Plus particulièrement, l'étape ii est réalisée dans l'état étiré de l'éprouvette à l'étape i, ou en d'autres termes dans les conditions de contraintes mécaniques de l'étape i. Pour se faire, l'éprouvette demeure placée entre les mors. En outre, l'enceinte de conditionnement du dispositif de traction est retirée pour pouvoir refroidir l'éprouvette à température ambiante (25°C).

### 3. Rétractation de l'élément de protection rétractable à chaud

L'éprouvette refroidie à l'étape ii est ensuite traitée thermiquement afin qu'elle se rétracte dans son allongement initial LO de 15 mm, allongement initial qu'elle avait avant l'étape i.

Ce traitement thermique est réalisé à l'aide d'un pistolet à air chaud (ou décapeur thermique) utilisé à sa puissance maximale, pendant 10 minutes. La température obtenue à la surface de l'élément de protection grâce à ce traitement thermique est supérieure à la température de fusion de l'EVA composant la composition polymérique de l'exemple 11, à savoir elle est de l'ordre de 200°C.

### 4. Résultats

Le tableau 2 ci-dessous rassemble les mesures de conductivité électrique à différentes étapes de la fabrication de l'éprouvette, ainsi que ses mesures d'allongement.

La conductivité électrique est mesurée classiquement par l'intermédiaire de la résistance électrique de l'éprouvette, selon la formule R = p.e/S, dans laquelle :
- R = Résistance du matériau mesurée (Ω),
- e = Distance entre les deux points de mesures (m),
- S = Section de l'éprouvette entre les deux points de mesures (m²),
- ρ = Résistivité du matériau, qui est fonction de la conductivité électrique σ selon la formule bien établie σ = 1/ p (σ s'exprime en Siemens par mètre S.m⁻¹ ou en (Ω.m)⁻¹).

Dans la présente invention, la conductivité électrique est mesurée selon la norme ISO 3915, en courant continu et à 25 °C, à l'aide d'un sourcemètre (source de courant et mesure de tension) vendu sous la dénomination commerciale 2611A par la société Keithley.

L'allongement est mesuré à l'aide d'un pied à coulisse.

**Tableau 2**

| Eprouvette réalisée à partir de la composition polymérique I1 | Allongement de l'éprouvette, en mm | Conductivité électrique de l'éprouvette, en S.m⁻¹ |
|---|---|---|
| A l'état initial (avant l'étape i) | 15 | <1.10⁻⁸ |
| Après le traitement thermique de l'étape i | 30 | <1.10⁻⁸ |
| Après le refroidissement de l'étape ii | 30 | <1.10⁻⁸ |
| Après l'étape de rétractation par traitement thermique | 15 | environ 1.10⁻¹ |

## Revendications

1. Elément de protection rétractable à chaud comprenant au moins une couche de protection obtenue à partir d'une composition polymérique comprenant un matériau polymère, **caractérisé en ce que** la composition polymérique comprend en outre une charge électriquement conductrice ayant une surface spécifique BET d'au moins 100 m²/g selon la norme ASTM D 6556 (2014).

2. Elément de protection selon la revendication 1, **caractérisé en ce que** la charge électriquement conductrice a un facteur de forme d'au moins 10.

3. Elément de protection selon la revendication 1 ou 2, **caractérisé en ce que** la charge électriquement conductrice a un facteur de forme d'au moins 100.

4. Elément de protection selon l'une quelconque des revendications précédentes, **caractérisé en ce que** la charge électriquement conductrice est une charge carbonée.

5. Elément de protection selon l'une quelconque des revendications précédentes, **caractérisé en ce que** la charge électriquement conductrice est choisie parmi les noirs de carbone, les fibres de carbone, les graphites, les graphènes, les fullerènes, les nanotubes de carbone, et un de leurs mélanges.

6. Elément de protection selon l'une quelconque des revendications précédentes, **caractérisé en ce que** la composition polymérique comprend au plus 30,0 parties en poids de charge électriquement conductrice, et de préférence au plus 10,0 parties en poids de charge électriquement conductrice, pour 100 parties en poids de matériau polymère.

7. Elément de protection selon l'une quelconque des revendications précédentes, **caractérisé en ce que** le matériau polymère comprend au moins un polymère d'oléfine.

8. Elément de protection selon la revendication 7, **caractérisé en ce que** le polymère d'oléfine est un copolymère d'éthylène et d'acétate de vinyle (EVA).

9. Elément de protection rétractable selon l'une quelconque des revendications précédentes, **caractérisé en ce que** la couche de protection est électriquement isolante avec une conductivité électrique d'au plus 1.10⁻⁸ S/m, mesurée à 25°C en courant continu.

10. Elément de protection rétractable selon l'une quelconque des revendications précédentes, **caractérisé en ce que** la couche de protection est non réticulée.

11. Elément de protection rétracté, obtenu à partir de l'élément de protection rétractable selon l'une quelconque des revendications précédentes, **caractérisé en ce que** la couche de protection est semi-conductrice à l'état rétracté, avec une conductivité électrique d'au moins 1.10⁻⁸ S/m, et de préférence d'au moins 1.10⁻³ S/m, mesurée à 25°C en courant continu.

12. Procédé de fabrication d'un élément de protection rétractable à chaud selon l'une quelconque des revendications 1 à 10, **caractérisé en ce qu'**il comprend les étapes suivantes :
i. étirer à chaud la composition polymérique; et
ii. refroidir dans son état étiré, la composition polymérique étirée à l'étape i.

13. Câble comprenant un élément de protection rétracté obtenu à partir d'un élément de protection rétractable à chaud défini selon l'une quelconque des revendications 1 à 10.

14. Câble selon la revendication 13, **caractérisé en ce que** la couche de protection est une couche semi-conductrice.

15. Procédé de fabrication d'un câble comprenant un élément de protection rétracté selon la revendication 13 ou 14, **caractérisé en ce qu'**il comprend les étapes suivantes :
a. positionner l'élément de protection rétractable autour d'un câble, et
b. traiter thermiquement l'élément de protection rétractable positionné à l'étape a, pour former l'élément de protection rétracté.
